# FASCICULE DE BREVET EUROPEEN

(11) **EP 3 469 662 B1**
(45) Date de publication et mention de la délivrance du brevet: **13.10.2021**
(21) Numéro de dépôt: 17734797.8
(22) Date de dépôt: 12.06.2017
(51) Int. Cl.: B60L 53/16, B60L 53/35, H01R 13/62

(54) **DISPOSITIF DE CONNEXION ÉLECTRIQUE**
ELEKTRISCHES VERBINDUNGSVORRICHTUNG
ELECTRICAL CONNECTION DEVICE

(30) Priorité: 13.06.2016 FR 1655450
(43) Date de publication de la demande: 17.04.2019
(73) Titulaire: Gulplug, 38000 Grenoble (FR)
(72) Inventeur: TROUFFLARD, Ronan, 38120 Saint Egrève (FR); BRAY, Amandine, 38000 Grenoble (FR); POIRON, Vianney, 38000 Grenoble (FR); CHAZEL, Bruno, 38500 VOIRON (FR)
(74) Mandataire: INNOV-GROUP
(86) Numéro de dépôt international: PCT/FR2017/051490
(87) Numéro de publication internationale: WO 2017/216458

(56) Documents cités:
- DE-U1-202010 015 377
- DE-U1-202012 003 577
- JP-A- 2008 282 568
- KR-A- 20150 127 571
- US-A1- 2013 076 296
- US-A1- 2013 171 840
- US-A1- 2014 120 746

## Description

### Domaine technique de l'invention

La présente invention se rapporte à un dispositif de connexion électrique.

### Etat de la technique

Des systèmes de connexion électrique en deux parties qui utilisent un effet magnétique pour attirer une première partie vers une deuxième partie et réaliser une connexion électrique lorsque les deux parties sont accouplées sont bien connus dans l'état de la technique. Ils sont notamment décrits dans les demandes de brevets WO2014/202849A1**,** WO2012/032230A1**,** EP2595252A1 ou EP1667459A1**.** C'est le cas également dans le brevet EP2461429B1 qui décrit un système de connexion électrique dans lequel une fiche est attirée par effet magnétique vers un boîtier pour réaliser une connexion électrique.

Les documents DE 20 2010 015377U1 et US2013/171840 A1 décrivent également des dispositifs de connexion électrique, utilisant l'effet magnétique.

Par ailleurs, pour la recharge d'appareils électriques, notamment des véhicules électriques, de nombreuses solutions de recharge par induction ont déjà été proposées. Dans ces solutions, une bobine primaire reliée à un circuit électrique d'alimentation et une bobine secondaire reliée à la batterie du véhicule électrique sont positionnées en vis-à-vis l'une de l'autre de manière à générer un courant induit de rechargement dans la bobine secondaire. Ces solutions à induction sont particulièrement avantageuses car elles évitent toute intervention humaine. Cependant, elles présentent aussi un certain nombre d'inconvénients qui les rendent difficiles à déployer à grande échelle. Ces inconvénients sont les suivants :
- Elles nécessitent un positionnement parfait de la bobine secondaire par rapport à la bobine primaire pour maximiser le rendement ;
- Elles nécessitent une infrastructure particulièrement lourde et coûteuse ;
- Le réglage du positionnement entre les deux bobines peut nécessiter l'emploi de moyens particuliers, ce qui alourdit encore l'infrastructure et son coût ;

On comprend de ce qui précède que les solutions à induction risquent de se heurter à un certain nombre d'obstacles. Il serait donc souhaitable de proposer une solution de connexion électrique qui présente certains avantages des solutions à induction, notamment l'absence d'intervention humaine, mais qui n'en n'a pas tous les inconvénients listés ci-dessus.

Le but de l'invention est donc de proposer un dispositif de connexion électrique qui permet d'assurer une connexion électrique en conservant les avantages d'une solution à induction, tout en limitant ses inconvénients. Le but de l'invention est également de proposer un système de connexion électrique qui puisse être employé dans une installation de recharge d'un véhicule électrique.

### Exposé de l'invention

Ce but est atteint par un dispositif de connexion électrique selon la revendication 1. Autres modes de réalisation sont définis dans les revendication dépendantes.

### Brève description des figures

D'autres caractéristiques et avantages vont apparaître dans la description détaillée qui suit faite en regard des dessins annexés dans lesquels :
- La figure 1 représente une première variante de réalisation du système de connexion électrique de l'invention.
- Les figures 2A et 2B représentent une autre variante de réalisation du système de connexion électrique de l'invention.
- Les figures 3A à 3C illustrent un principe de fonctionnement des moyens magnétiques du dispositif de connexion électrique de l'invention.
- La figure 4 représente exemple du système de connexion électrique, ne relève pas de l'invention et qui n'est présent qu'à titre illustratif.
- Les figures 6 à 9 représentent plusieurs d'exemples du dispositif de connexion électrique ne relèvent pas de l'invention et qui ne sont présents qu'à titre illustratif.

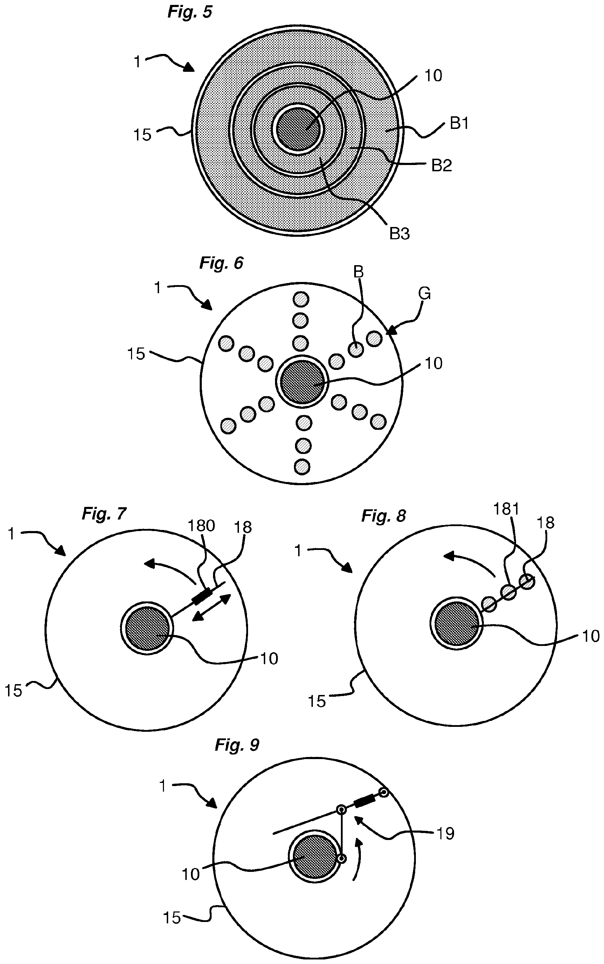

La figure 5 représente un dispositif de connexion électrique de l'invention.

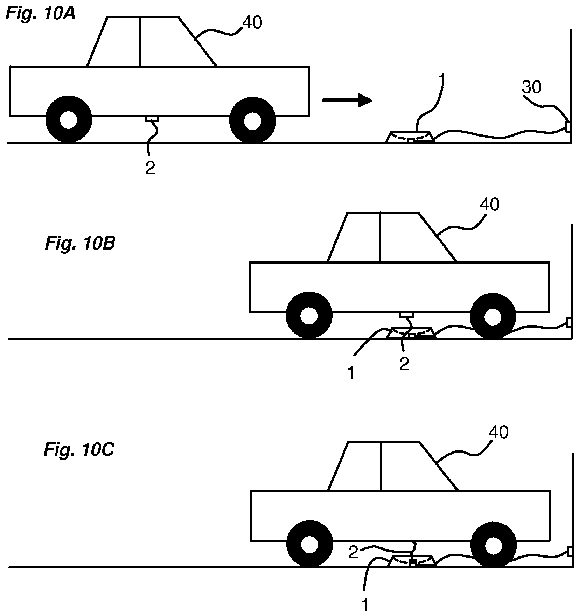

- Les figures 10A à 10C illustrent le principe de fonctionnement du système de l'invention, selon le premier mode de réalisation.

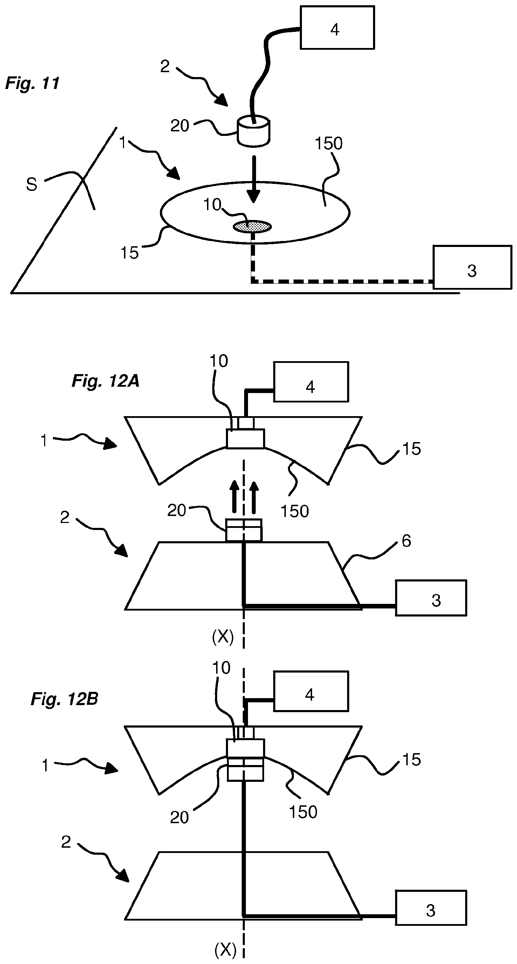

- La figure 11 représente une variante d'agencement du système de connexion électrique de l'invention.
- Les figures 12A et 12B représentent une variante d'agencement du système de connexion électrique de l'invention.

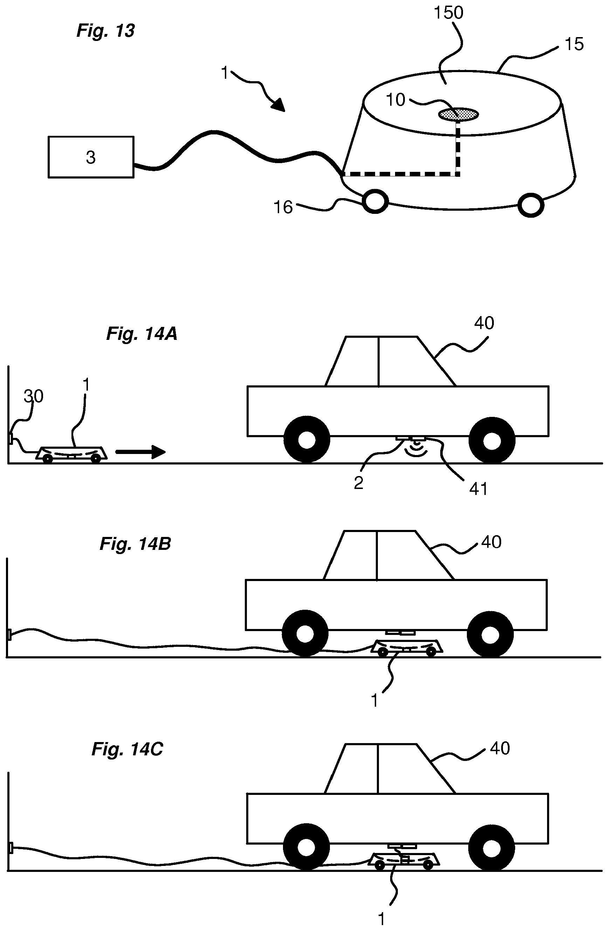

- La figure 13 représente une autre variante de réalisation du système de connexion électrique de l'invention.
- Les figures 14A à 14C illustrent le principe de fonctionnement du système l'invention, représenté sur la figure 13, pour son application dans une installation de recharge d'un véhicule électrique.

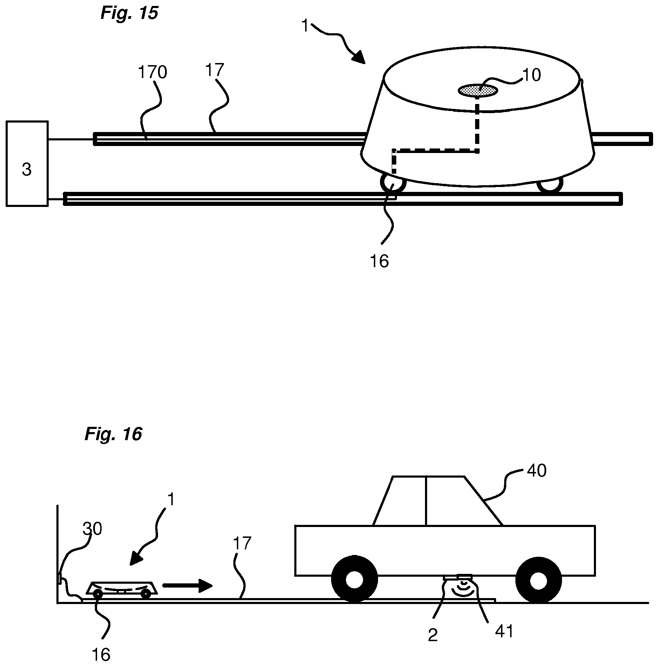

- La figure 15 représente une autre variante de réalisation du système de l'invention.
- La figure 16 illustre le principe de fonctionnement du système de l'invention représenté sur la figure 15.

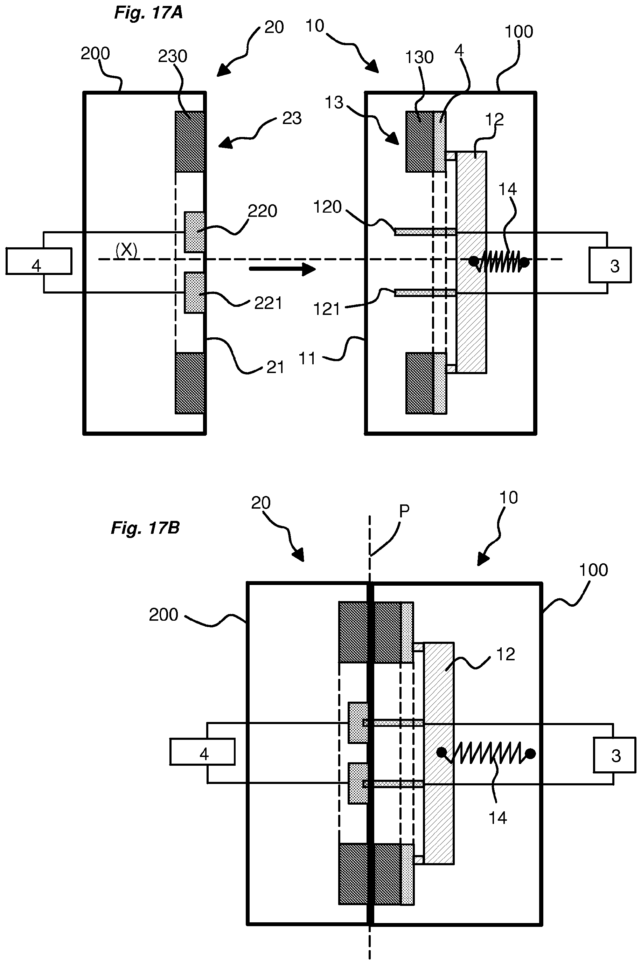

- Les figures 17A et 17B représentent un exemple d'un ensemble de connexion électrique employé dans le système de connexion électrique de l'invention, respectivement en position déconnectée et en position connectée.

### Description détaillée d'au moins un mode de réalisation

L'invention vise à proposer un système simple qui puisse remplacer avantageusement les solutions à induction, sans en avoir tous les inconvénients. Le système de l'invention est une solution filaire, c'est-à-dire qu'il comporte une connexion électrique physique entre un premier organe de connexion présent dans un premier connecteur et un deuxième organe de connexion présent dans un deuxième connecteur. Le système de l'invention présente la particularité de fonctionner par effet magnétique pour assurer la réunion des deux connecteurs et ainsi permettre la connexion électrique.

De manière plus précise, le système de l'invention se compose de deux parties, dite première partie 1 et deuxième partie 2, l'une des deux parties étant destinée à être raccordée à un circuit électrique d'alimentation 3, par exemple raccordé au réseau et l'autre partie étant destinée à être raccordée à un appareil électrique 4 à alimenter, par exemple un système d'alimentation d'un véhicule électrique.

Toute solution de connexion électrique vers l'appareil électrique ou le circuit électrique d'alimentation pourra être envisagée, telle que câble, tige conductrice, ou autre solution équivalente...

La première partie 1 du système est formée d'un dispositif de connexion électrique. Ce dispositif de connexion électrique comporte une enveloppe 15, un connecteur électrique intégré à ladite enveloppe 15 et une surface de guidage 150 intégrée à ladite enveloppe et agencée autour de la face avant dudit connecteur électrique. Le dispositif de connexion électrique sera avantageusement monobloc. Son enveloppe 15 comporte une surface externe définissant un volume interne pouvant intégrer toute solution utile à son fonctionnement. Cette enveloppe 15 pourra être constituée d'un ou plusieurs boîtiers de formes adaptées. L'enveloppe sera par exemple en forme de cylindre, sa hauteur étant très faible par rapport à son diamètre, lui donnant la forme d'un disque ou d'une rondelle d'épaisseur non nulle.

Chaque partie du système comporte un connecteur électrique 10, 20 distinct. Chaque connecteur 10, 20 présente une face avant 11, 21 de connexion mécanique et électrique. Les deux faces avant sont destinées à être mises en appui l'une contre l'autre par effet magnétique de manière à accoupler les deux connecteurs 10, 20 entre eux et à réaliser la connexion électrique. Chaque face avant d'un connecteur définit et délimite sa surface de connexion mécanique et électrique avec l'autre connecteur.

De manière non limitative, un premier connecteur 10 présente au moins un organe de connexion électrique et un deuxième connecteur 20 présente au moins un organe de connexion électrique destiné à être raccordé électriquement à l'organe de connexion électrique du premier connecteur 10. De manière non limitative, le premier connecteur 10 et le deuxième connecteur 20 présentent par exemple l'architecture décrite ci-dessous en liaison avec les figures 17A et 17B.

De manière non limitative, le premier connecteur 10 comporte avantageusement un premier boîtier 100, par exemple en matériau plastique. Le premier boîtier 100 du premier connecteur 10 présente une face avant 11 contre laquelle peut venir s'adapter le deuxième connecteur 20. Le premier connecteur 10 comporte également un support mobile 12 logé dans ledit premier boîtier et sur lequel sont fixés deux premiers contacts électriques 120, 121. Les deux premiers contacts électriques 120, 121 sont reliés au circuit électrique d'alimentation 3 par l'intermédiaire de fils électriques conducteurs. Le premier connecteur 10 comporte également une première partie magnétique 13 mobile logée dans ledit premier boîtier et solidaire en mouvement du support mobile 12 et agencée pour se déplacer par effet magnétique entre une première position et une deuxième position. Un ressort 14 positionné à l'intérieur du premier boîtier 100 du premier connecteur, par exemple fixé d'une part au boîtier 100 du premier connecteur et d'autre part au support mobile 12, est agencé pour ramener la première partie magnétique 13 dans sa première position lorsque l'effet magnétique nécessaire à l'extraction n'est plus assez important. Dans la première position de la première partie magnétique 13, les premiers contacts électriques 120, 121 sont rétractés à l'intérieur du premier connecteur 1 et dans la deuxième position de la première partie magnétique 13, les premiers contacts électriques 120, 121 sont à l'extérieur du premier connecteur 10, traversant le plan formé par sa face avant 11. Dans sa deuxième position, l'ensemble mobile formé par le support 12 et la partie magnétique 13 vient en butée, par exemple contre une partie du boîtier 10.

Le deuxième connecteur 20 comporte pour sa part, avantageusement, un deuxième boîtier 200, par exemple en matériau plastique, présentant une face avant 21 destinée à venir en appui suivant un axe (X) contre la face avant 11 du premier connecteur 10, définissant ainsi leur surface de connexion (défini verticalement sur la figure 10B). Pour chaque connecteur, la surface de connexion correspond ainsi à la surface de contact avec l'autre connecteur lorsque le premier connecteur 10 est collé par effet magnétique au deuxième connecteur. Elle est formée préférentiellement de manière symétrique autour de l'axe (X).

Le deuxième connecteur 20 comporte en outre deux deuxièmes contacts électriques 220, 221, par exemple deux pistes électriques affleurantes sur sa face avant 21, destinés à venir en contact électrique avec les deux premiers contacts électriques 120, 121 du premier connecteur 10. Il comporte également une deuxième partie magnétique 23 fixe à l'intérieur du boîtier et destinée à attirer la première partie magnétique 13 lorsque le deuxième connecteur 20 est approchée du premier connecteur 10 afin d'assurer à la fois la réunion des deux boîtiers l'un contre l'autre, par leur face avant, suivant leur surface de connexion, le déplacement du support mobile 12 dans le premier boîtier et ainsi l'extraction des premiers contacts électriques 120, 121 vers leur deuxième position en vue de se connecter électriquement aux deux contacts électriques 220, 221 du deuxième connecteur 20. Préférentiellement, les deux pistes électriques sont de forme circulaire et positionnées de manière concentrique. Selon la forme des deux faces avant, leur surface de connexion pourra prendre différentes formes. De manière non limitative, elle sera sensiblement plane comme sur les figures annexées ou dans une variante de réalisation demi-sphérique.

La première partie magnétique et/ou la deuxième partie magnétique des connecteurs comportent au moins un aimant permanent de manière à générer au moins un flux magnétique entre les deux parties magnétiques et générer lesdits effets décrits ci-dessus lorsque le deuxième connecteur 20 est approché du premier connecteur 10 ou inversement. Différentes architectures magnétiques pourront ainsi être envisagées, telles que celles décrites dans les demandes EP2628213A1**,** EP2667459A1,...Cependant, celles-ci ne font pas l'objet de la présente demande et il faut comprendre que l'invention pourra s'adapter à n'importe quelle architecture, du moment que celle-ci prévoit la présence d'un flux magnétique maximal entre la première partie magnétique et la deuxième partie magnétique lorsque le deuxième connecteur est adapté sur le premier connecteur et diminuant lorsque le deuxième connecteur est éloigné du premier connecteur ou inversement. En référence aux figures annexées, la première partie magnétique 13 comporte par exemple un aimant permanent 130 de forme annulaire et la deuxième partie magnétique 23 comporte un aimant permanent 230 de forme annulaire. Sur les figures 17A et 17B, l'aimant permanent 130 est par exemple fixé sur une pièce ferromagnétique 4. L'aimant permanent 130 et l'aimant permanent 230 sont destinés à se positionner de manière coaxiale lorsque le deuxième connecteur 20 est approché du premier connecteur 10 ou inversement. Lorsque le deuxième connecteur 20 est en vis-à-vis du premier connecteur 10, l'aimant permanent 130 et l'aimant permanent 230 sont agencés de manière à présenter chacun une surface d'entrefer parallèle au plan de jonction P.

En variante de réalisation, une solution d'électro-aimant peut être agencée dans la partie magnétique du premier connecteur ou du deuxième connecteur pour réaliser l'attraction magnétique entre les deux connecteurs.

Le dispositif de connexion électrique du système comporte des moyens magnétiques de guidage pour guider le premier connecteur 10 vers le deuxième connecteur 20 ou inversement et ainsi favoriser leur jonction/connexion par l'effet magnétique. Ces moyens magnétiques sont intégrés à l'enveloppe 15 du dispositif et agencés autour du connecteur intégré à l'enveloppe 15 du dispositif. Ils sont destinés à favoriser la jonction par effet magnétique entre les deux connecteurs.

Selon un aspect de l'invention, le dispositif de connexion électrique du système comporte une surface de guidage 150 agencée autour de la surface de connexion de son connecteur. A partir de l'architecture des deux connecteurs qui est décrite ci-dessus, cette surface de guidage 150 s'étend autour de la face avant d'un boîtier, premier boîtier 100 du premier connecteur 10 ou deuxième boîtier 200 du deuxième connecteur 20, pour assurer un guidage des deux boîtiers l'un vers l'autre et favoriser la connexion des deux connecteurs entre eux. Cette surface de guidage pourra prendre toute forme appropriée.

Cette surface définit donc une collerette autour de la face avant du boîtier intégré du connecteur et est réalisée sur l'enveloppe du dispositif. Elle pourra prendre différentes formes :
- Plane,
- Concave de manière à former un réceptacle, ou
- Convexe.

Elle sera préférentiellement de forme symétrique autour de l'axe (X) ou d'un plan de sorte que la surface de connexion est alors positionnée suivant cet axe ou suivant un axe de ce plan. En complément, elle pourra présenter un bord externe de toute forme, par exemple circulaire, rectangulaire ou autre. Dans la suite de la description et sur les figures, la surface de guidage 150 est présentée avec un bord externe circulaire.

Par ailleurs, elle présentera les autres particularités suivantes :
- Elle est distincte de la face avant du connecteur et elle ne comporte donc aucun contact électrique ;
- La surface de guidage s'étend en périphérie de la face avant du connecteur intégré à l'enveloppe dispositif, tout autour de la surface de connexion ;
- Elle présente une superficie supérieure à celle de la face avant du connecteur du dispositif ;
- Elle prolonge la face avant du boîtier du connecteur du dispositif de manière continue vers l'extérieur ;

Dans sa forme concave, elle sera par exemple réalisée sous la forme d'un tronc de cône renversé dont la petite base est occupée par la face avant du connecteur intégré. Dans cette configuration, sa directrice forme avantageusement un angle avec l'axe (X) qui est supérieur à 30° et inférieur à 90°. Sa hauteur sera adaptée à l'application envisagée. Elle sera préférentiellement au moins deux fois supérieure à la hauteur du boîtier du connecteur intégré.

Avantageusement, la surface de guidage présente une superficie au moins deux fois supérieure à celle de la surface de connexion du connecteur.

Les figures annexées représentent différents modes de réalisation du dispositif et du système de connexion électrique de l'invention.

### Figure 1 :

Le dispositif de connexion électrique est présenté avec une surface de guidage plane autour de la face avant 11 du connecteur 10. On verra ci-après que des moyens magnétiques sont alors employés pour attirer le deuxième connecteur 20 vers le premier connecteur.

### Figures 2A et 2B :

L'enveloppe 15 présente la forme d'un réceptacle doté d'une surface de guidage 150 concave.

La taille du réceptacle, sa profondeur et notamment la superficie et l'inclinaison de sa surface de guidage 150 seront adaptées à l'application envisagée. Ces caractéristiques sont notamment définies ci-dessus. Dans une installation de recharge d'un véhicule électrique 40, ces paramètres seront fixés de manière à obtenir la connexion mécanique et donc électrique entre le premier connecteur 10 et le deuxième connecteur 20, sans nécessiter un positionnement trop précis du véhicule par rapport au réceptacle 15 ou du réceptacle par rapport au véhicule.

Le réceptacle présente ainsi une forme évasée définissant ladite surface interne de guidage 150 avec une forme concave en vis-à-vis du deuxième connecteur 20. Avantageusement, le réceptacle présente une forme symétrique autour d'un axe de révolution. Préférentiellement, cet axe sera confondu avec l'axe (X) définissant la direction de déplacement du deuxième connecteur vers le premier connecteur. Le boîtier 100 du premier connecteur 10 est avantageusement intégré audit réceptacle et avantageusement positionné au fond de la concavité ainsi formée, préférentiellement au centre de celle-ci. La face avant 11 dudit premier connecteur 10 est avantageusement présentée au fond dudit réceptacle de manière à être accessible à la connexion électrique. Elle est préférentiellement agencée de manière perpendiculaire à l'axe de révolution (X) formant le réceptacle. Ladite surface de connexion est ainsi perpendiculaire à cet axe (X). Le boîtier 100 du premier connecteur 10 pourra être intégré audit réceptacle par tous moyens appropriés. Un surmoulage en matériau plastique entre le réceptacle et le boîtier est ainsi une option envisageable. La surface de guidage 150 formée par le réceptacle s'étend donc autour du boîtier 100 du premier connecteur 10.

Le dispositif selon l'invention comporte des moyens magnétiques agencés pour guider le deuxième connecteur 20 vers le premier connecteur 10 par effet magnétique. De manière plus précise, ces moyens magnétiques sont destinés à générer un ou plusieurs champs magnétiques par rapport au deuxième connecteur 20, de manière à forcer ledit deuxième connecteur 20 à aller vers l'axe (X) du dispositif où est situé le premier connecteur 10, et à le faire rentrer dans le champ magnétique d'attraction généré par la partie magnétique 13 du premier connecteur 10. Ces moyens magnétiques sont répartis autour du premier connecteur 10 et de sa face avant 11 de connexion.

Les moyens magnétiques peuvent être intégrés à l'enveloppe 15 ou logés dans le volume interne de l'enveloppe 15 du dispositif de connexion électrique.

Les moyens magnétiques peuvent être agencés sur ladite surface de guidage 150 ou logés sous ladite surface de guidage.

Les moyens magnétiques sont particulièrement utiles lorsque la surface de guidage est plane ou convexe.

### Figures 3A à 3C

Ces figures illustrent le déplacement du deuxième connecteur 20, réalisé par l'effet magnétique généré par les moyens magnétiques du dispositif.

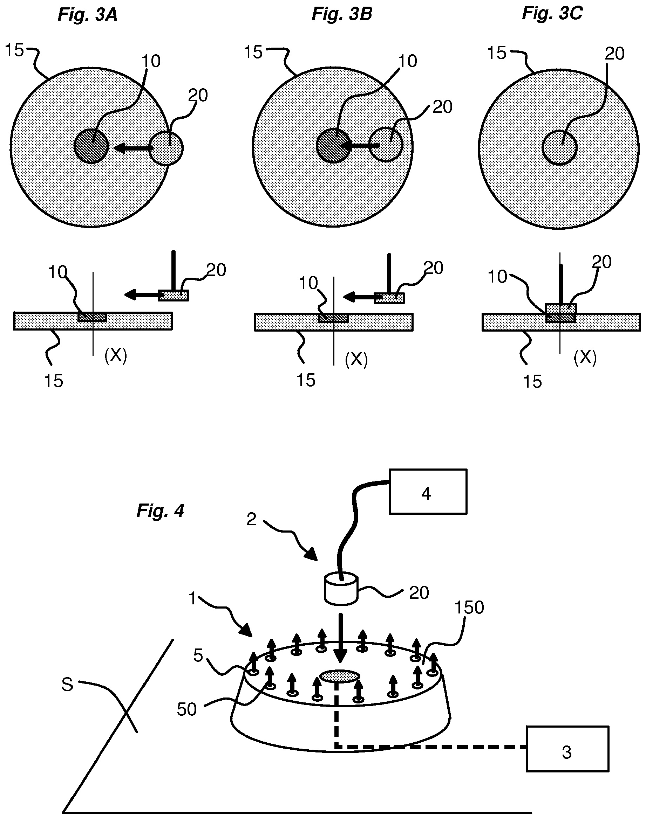

Sur la figure 3A, le deuxième connecteur 20 est éloigné du premier connecteur 10 mais se trouve au moins partiellement à l'aplomb de la surface de guidage 150.

Sur la figure 3B, le deuxième connecteur 20 est attiré un peu plus vers l'axe (X) du dispositif où est situé le premier connecteur 10.

Sur la figure 3C, le deuxième connecteur 20 est attiré par effet magnétique par le premier connecteur 10 et la jonction est opérée entre les deux connecteurs.

### Figure 4 :

Dans un exemple, les moyens magnétiques du dispositif comportent par exemple des aimants permanents 5 répartis autour du boîtier 100 du premier connecteur 10, agencés à l'intérieur de l'enveloppe du dispositif ou intégrés dans le matériau formant ladite surface de guidage 150.

Les aimants permanents seront par exemple répartis par rapport au premier connecteur 10 pour ne pas créer de conflit entre l'effet d'attraction mis en oeuvre pour attirer le deuxième connecteur 20 et l'effet de répulsion mis en oeuvre par ces moyens magnétiques. Ils seront par exemple répartis suivant au moins une couronne annulaire agencée de manière concentrique par rapport au premier connecteur 10. Cette couronne sera d'un diamètre suffisant pour permettre un guidage du deuxième connecteur vers le centre de la surface de guidage (si celle-ci présente une forme symétrique).

Chaque aimant génère par exemple un champ magnétique de répulsion 50 qui force le deuxième connecteur 20 à se diriger vers le premier connecteur 10 par effet magnétique. Selon une variante possible de réalisation, les champs magnétiques de répulsion 50 générés par les aimants permanents 5 présentent tous des directions parallèles et des intensités sensiblement identiques. Selon une autre variante de réalisation, ils ont des orientations et/ou des intensités différentes de manière à favoriser le guidage du deuxième connecteur 20 vers le premier connecteur 10. Selon une particularité de l'invention, les champs magnétiques de répulsion 50 générés par les aimants 5 situés les plus à l'extérieur ont par exemple une intensité plus élevée que ceux situés au plus près du premier connecteur 10 de manière à forcer l'orientation du deuxième connecteur 20 vers le centre du réceptacle 15 et donc vers le premier connecteur 10.

Selon d'autres exemples représentées sur les figures 6 à 9, les moyens magnétiques du dispositif sont commandés pour ramener le deuxième connecteur vers le premier connecteur, notamment lorsque le deuxième connecteur 20 n'est pas dans l'axe du premier connecteur 10. La commande est électrique et/ou mécanique.

Les moyens magnétiques sont logés dans le volume interne défini par l'enveloppe 15 du dispositif.

### Figure 5 :

Selon l'invention, les moyens magnétiques comportent avantageusement plusieurs bobines électromagnétiques B1, B2, B3 commandées selon une séquence de commande déterminée par des moyens de commande. Les moyens magnétiques comportent plusieurs de bobines électromagnétiques. De manière non limitative, la figure 5 montre une architecture à trois bobines électromagnétiques B1, B2, B3 concentriques autour de l'axe (X). Une architecture à quatre bobines électromagnétiques s'avère également particulièrement avantageuse.

Les bobines électromagnétiques B1, B2, B3 sont chacune réalisées sous une forme annulaire et présentent des diamètres différents.

Les bobines annulaires sont disposées de manière concentrique autour du premier connecteur.

Les bobines concentriques sont alimentées l'une après l'autre selon une séquence de commande. Deux exemples de séquence de commande sont indiqués ci-dessous mais la séquence de commande pourra être adaptée selon différents paramètres, notamment le nombre de bobines employées, la taille du dispositif, la force électromagnétique générée par chaque bobine en fonctionnement, l'environnement de fonctionnement du dispositif...

De manière non limitative, la séquence de commande est par exemple la suivante :
- Activation de la bobine externe B1, c'est-à-dire la plus éloignée de l'axe du dispositif où se situe le premier connecteur. La bobine externe B1 crée un premier champ magnétique axial entraînant un premier déplacement du deuxième connecteur 20 vers l'axe du dispositif.
- Activation de la bobine intermédiaire B2 et désactivation de la bobine externe B1. La bobine intermédiaire B2 crée un deuxième champ magnétique axial poursuivant l'attraction du deuxième connecteur 20 vers l'axe du dispositif.
- Activation de la bobine interne B3, la plus proche de l'axe, et désactivation de la bobine intermédiaire B2. La bobine interne B3 crée un troisième champ magnétique axial sur lequel le deuxième connecteur va s'aligner.

De manière non limitative, une autre séquence de commande pourrait être la suivante :
- Activation de la bobine externe B1, c'est-à-dire la plus éloignée de l'axe du dispositif où se situe le premier connecteur. La bobine externe B1 crée un premier champ magnétique axial entraînant un premier déplacement du deuxième connecteur 20 vers l'axe du dispositif.
- Activation de la bobine interne B3 et désactivation de la bobine externe B1. La bobine interne B1 crée un deuxième champ magnétique axial permettant d'attirer directement le deuxième connecteur 20 vers le premier connecteur.
- Si la connexion est réalisée, la séquence est terminée.
- Si la connexion n'est pas réalisée, la séquence se poursuit avec une activation de la bobine intermédiaire B2 et désactivation de la bobine interne B3.
- Activation de la bobine interne B3, la plus proche de l'axe, et désactivation de la bobine intermédiaire B2 pour attirer définitivement le deuxième connecteur 20 sur le premier connecteur 10.

L'attraction magnétique du premier connecteur 10 situé dans l'axe du dispositif permet ensuite d'assurer l'attraction magnétique finale pour assurer la jonction des deux connecteurs 10, 20.

Les moyens de commande comportent par exemple un microcontrôleur destiné à exécuter la séquence de commande et des interrupteurs commandés par le microcontrôleur de manière adaptée pour exécuter la séquence de commande. Chaque interrupteur est destiné à la commande d'une bobine B1, B2, B3 distincte, de manière à l'activer ou la désactiver.

Des moyens de détection de la connexion entre les deux connecteurs seront avantageusement employés pour donner l'information au microcontrôleur sur l'état d'avancement de la séquence. De manière non limitative, ces moyens de détection peuvent comporter un ou plusieurs micro-interrupteurs.

Selon un mode de réalisation, les moyens de commande sont par exemple configurés pour exécuter une séquence d'extraction, c'est-à-dire de déconnexion du deuxième connecteur par rapport au premier connecteur. Cette séquence d'extraction est par exemple mise en œuvre en commandant l'activation de la bobine interne B3 avec un courant inverse. Le champ magnétique généré par cette bobine serait alors d'une intensité suffisante pour attirer le deuxième connecteur et le déconnecter du premier connecteur. L'intensité devra être suffisante pour contrer le champ magnétique d'attraction généré entre les moyens magnétiques présents dans les deux connecteurs 10, 20.

### Figure 6 :

Dans cet exemple, les trois bobines agencées de manière concentriques sont remplacées chacune par plusieurs groupes G de plusieurs bobines (trois bobines B par groupe sur la figure 6). Chaque groupe de bobines comporte plusieurs bobines B agencées suivant une direction radiale autour de l'axe (X). La figure 6 illustre cette exemple, utilisant six groupes de trois bobines. La séquence de commande décrite ci-dessus pourra s'appliquer de manière identique, en activant d'abord les bobines externes de chaque groupe, puis les bobines intermédiaires de chaque groupe et enfin les bobines internes de chaque groupe. En variante de réalisation, la séquence de commande pourra être mise en œuvre sur les bobines d'un ou plusieurs groupes sélectionnés, par exemple en fonction de la position de connecteur à attirer. De la même manière, le dispositif comporte des moyens de commande employés pour exécuter une séquence de commande identique à celle décrite ci-dessus.

### Figures 7 à 9 :

Le dispositif dans cet exemple, comporte des moyens mécaniques pour actionner les moyens magnétiques en mouvement à l'intérieur de l'enveloppe 15 du dispositif, sous la surface de guidage 150.

Dans un premier exemple, le dispositif peut comporter un bras mécanique 18 portant les moyens magnétiques. Le bras 18 est actionnable en rotation autour de l'axe (X) (figures 7 et 8).

Les moyens magnétiques peuvent être actionnés en translation sur le bras 18, par un mécanisme de glissière (figures 7 et 8).

Dans un autre exemple, le dispositif peut comporter un mécanisme 19 articulé comprenant un premier bras actionnable en pivotement autour d'un point fixe à une extrémité et un deuxième bras relié par une liaison de glissière au premier bras et actionnable en rotation autour de l'axe (X) (figure 9).

Les moyens magnétiques comportent alors un ou plusieurs aimants permanents et/ou une ou plusieurs bobines électromagnétiques commandés selon la position du deuxième connecteur et/ou selon une séquence de commande déterminée (figures 7 et 8) exécutée par les moyens de commande.

Selon un exemple, le dispositif peut comporter des moyens de protection assurant une protection du connecteur et/ou de la surface de guidage contre la poussière et de manière avantageuse une étanchéité à toute particule (eau notamment). Ces moyens de protection peuvent comporter un diaphragme ou un capot rotatif ou coulissant. Ces moyens de protection peuvent être actionnés à l'approche du deuxième connecteur et/ou par les moyens mécaniques du dispositif cités ci-dessus en liaison avec la figure 9.

Dans une autre variante de réalisation, la surface de guidage 150 est par exemple composée d'un matériau plastique magnétique. Elle génère donc naturellement des champs magnétiques de direction et de sens adaptés pour guider le deuxième connecteur 20 vers le premier connecteur 10. Ce plastique magnétique est obtenu par mélange de plusieurs poudres, comme décrit par exemple dans la demande de brevet EP0441616A1**.**

De manière générale, en amenant les deux parties en vis-à-vis l'une de l'autre et en amenant les deux connecteurs suffisamment proches l'un de l'autre grâce à un guidage mécanique réalisé grâce à la surface de guidage 150 du dispositif et/ou à un guidage magnétique réalisé par les moyens magnétiques du dispositif, les deux connecteurs 10, 20 seront amenés à s'accoupler par effet magnétique. Ainsi, on peut avoir différents agencements possibles du système de l'invention. En considérant toujours de manière non limitative que la surface de guidage 150 est intégrée à la première partie 1 du système, on a les différents agencements ci-dessous.

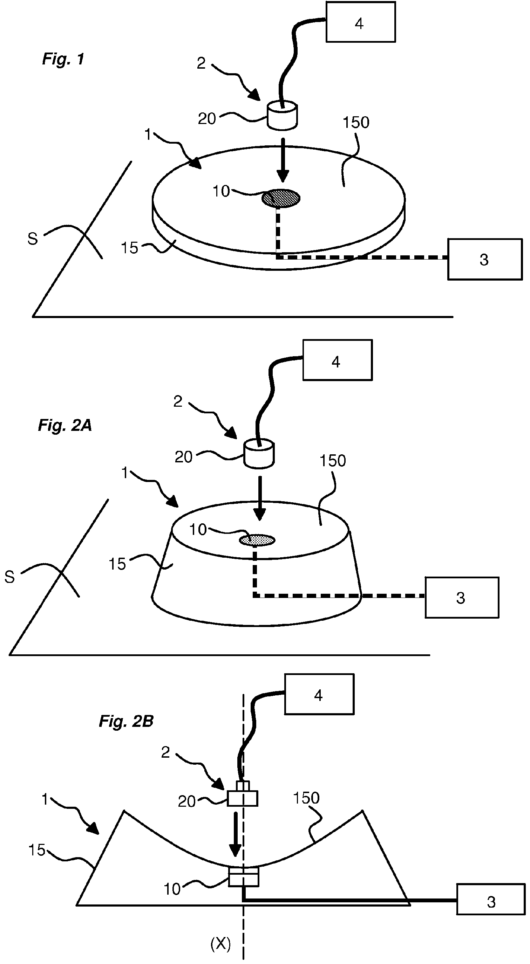

Dans un premier agencement illustré par les figures 1, 2A, 2B, la première partie 1 qui porte une surface de guidage 150 est posée sur le sol S et préférentiellement fixée dans le sol, la deuxième partie 2 étant alors approchée pour se connecter à la première partie. Le deuxième connecteur 20, raccordé par un câble ou un autre moyen à l'appareil électrique 4 à alimenter, est ainsi d'abord guidé, notamment par la gravité, vers le premier connecteur 10 à l'aide de la surface de guidage 150 puis entraîné vers le premier connecteur 10 par l'effet magnétique d'attraction générée par la partie magnétique 13 du premier connecteur 10 pour se connecter sur le premier connecteur.

Dans un deuxième agencement, la première partie qui porte une surface de guidage est intégrée dans le sol. En référence à la figure 11, la première partie 1 est ainsi au moins partiellement enterrée dans le sol S, préférentiellement complètement enterrée, de sorte que le bord externe de ladite surface soit affleurant par rapport au plan formé par le sol S. Le principe de fonctionnement de ce mode de réalisation reste identique à celui décrit ci-dessus.

Les figures 10A à 10C illustrent le principe de fonctionnement du système de l'invention décrit ci-dessus lorsque celui-ci est employé dans le premier agencement décrit ci-dessus, dans une installation de recharge d'un système d'alimentation d'un véhicule électrique 40. Le principe est décrit pour une surface de guidage de forme concave formant un réceptacle. Bien entendu, ce principe de fonctionnement sera applicable quelle que soit la variante de réalisation du dispositif et quel que soit son agencement par rapport au sol (posé sur le sol ou enterré dans le sol comme sur la figure 11).

**Figure 10A** : Le dispositif qui inclut le premier connecteur 10 et le réceptacle est posé sur le sol S d'une place de parking ou d'un garage. En variante de réalisation, celui-ci est enterrée dans le sol S comme décrit ci-dessus en liaison avec la figure 11. On comprendra ci-dessous que sa position sur le sol S doit être judicieusement choisie. Le premier connecteur 10 est connecté au circuit électrique d'alimentation 3. Sur ces figures, il est relié par un câble à une prise électrique murale 30 connectée au réseau. Pour une application de recharge d'un véhicule électrique 40, le dispositif doit être suffisamment peu épais et peu volumineux pour permettre au véhicule électrique 40 de venir se positionner au-dessus.

**Figure 10**B : Lorsque le véhicule électrique 40 se gare sur la place, celui-ci vient se positionner au-dessus du dispositif, de manière approximative pour que le deuxième connecteur 20 qui est raccordé à sa batterie se trouve sensiblement à l'aplomb du dispositif. Grâce à la présence du réceptacle, de sa surface de guidage de forme concave, il n'est pas nécessaire de positionner le deuxième connecteur 20 juste au-dessus du premier connecteur 10.

**Figure 10C** : Le conducteur commande alors la mise en charge de sa batterie. Cette commande entraîne une libération du deuxième connecteur 20, qui vient alors se déposer dans le réceptacle. Grâce notamment à sa surface de guidage 150 de forme concave, le dispositif le deuxième connecteur 20 de manière mécanique et/ou magnétique vers le premier connecteur 10. Le champ magnétique généré par la partie magnétique 13 du premier connecteur 10 finit d'attirer le deuxième connecteur 20 vers lui et permet de terminer l'accouplement mécanique et électrique entre le deuxième connecteur 20 et le premier connecteur 10.

La libération du deuxième connecteur 20 pourra être mise en œuvre par tous moyens appropriés. Un système d'enrouleur actionné par un moteur logé dans le châssis du véhicule électrique pourra par exemple être employé.

Dans un autre agencement représenté sur les figures 12A et 12B, le dispositif et le deuxième connecteur 20 sont amenées suffisamment proches l'une de l'autre de manière à ce que le deuxième connecteur 20 soit d'abord guidé par la surface de guidage 150, puis aspiré vers le premier connecteur 10 par l'effet magnétique d'attraction généré entre les deux parties magnétiques 13, 23. Dans le cadre d'une installation de recharge d'un véhicule électrique, cette solution consiste par exemple à positionner le dispositif dans le véhicule à recharger de manière à avoir le premier connecteur 10 et la surface de guidage 150 en vis-à-vis du sol. Le deuxième connecteur 20 est alors présenté à une hauteur suffisante pour être aspiré par l'effet magnétique. Il pourra juste être positionné au sommet d'un support 6 adapté ou amené à cette hauteur à l'aide d'un dispositif élévateur.

Dans les réalisations décrites ci-dessus en liaison avec les figures 1 à 12B, les liaisons électriques entre le dispositif de connexion électrique et la prise murale 30 sont effectuées par un câble électrique standard. Avantageusement, ce câble sera logé dans une gaine fixée au sol ou enterrée. Une solution d'enrouleur pourra également être prévue dans la première partie 1, par exemple dans le dispositif pour former un bloc facilement transportable et donc facilement déplaçable.

En référence aux figures 13 à 16, selon deux autres modes de réalisation du système de l'invention, le dispositif est présenté mobile en déplacement. Il est ainsi par exemple monté sur des roulettes 16 ou d'autres moyens adaptés, actionnées par un moteur, par exemple un moteur électrique logé dans le dispositif. Il comporte également une unité de commande agencée pour commander ledit moteur et diriger l'ensemble. Il comporte une unité de détection agencée pour se repérer et pour détecter une balise 41 de la deuxième partie 2 afin de se positionner de manière adaptée par rapport à elle. Dans une application d'installation de recharge d'une batterie d'un véhicule électrique, la balise 41 est positionnée sur le véhicule 40 et le dispositif comportant la surface de guidage 150, guidée par son unité de commande qui reçoit le signal émis par la balise, se déplace par rapport au véhicule pour se positionner sous l'emplacement où est la fiche 20.

De manière non limitative, ces modes de réalisation sont décrits et représentés pour un système de connexion de l'invention dans lequel la surface de guidage 150 du dispositif est de forme concave. Mais il faut comprendre qu'il est adaptable aux autres réalisations et agencements décrits ci-dessus. On comprend notamment que la solution par aspiration illustrée par les figures 12A et 12B pourrait tout à fait être adaptée à ce mode de réalisation. Dans ce cas, il s'agit de la deuxième partie 2 qui est mobile et qui vient être présentée sous la première partie 1, à une hauteur adaptée pour que le deuxième connecteur 20 soit aspiré par l'effet magnétique vers le premier connecteur 10.

Les figures 14A à 14C illustrent le principe de fonctionnement du système de l'invention décrit ci-dessus en liaison avec la figure 13 lorsque celui-ci est employé dans une installation de recharge d'un système d'alimentation d'un véhicule électrique 40.

**Figure 14A** : Lorsque le véhicule électrique 40 est garé, le conducteur commande la recharge du véhicule, ce qui entraîne l'activation de la balise 41. Le signal généré par la balise 41 réveille le dispositif formant la première partie 1 du système de l'invention qui, grâce à son unité de commande et à son unité de détection, détermine la position de la balise pour s'y rendre. Le dispositif de l'invention se déplace pour atteindre la balise.

**Figure 14B** : Le dispositif se positionne sous la voiture au niveau de la balise 41. Lorsqu'il est en position, le deuxième connecteur 20 d'alimentation de la deuxième partie 2 peut être libéré du véhicule 40. Cette libération peut être réalisée par une action du conducteur ou de manière automatique après la réception d'un signal de la part de la balise 41 ou du dispositif, indiquant que le dispositif est à l'aplomb de la balise 41 et est donc en position pour recevoir le deuxième connecteur 20.

**Figure 14C** : Après la libération du deuxième connecteur 20, celle-ci vient se déposer dans le réceptacle. Grâce à sa surface de guidage et/ou à ses moyens magnétiques de guidage, le dispositif guide la fiche 20 de manière mécanique et/ou magnétique vers le premier connecteur 10. Le champ magnétique généré par la partie magnétique 13 du premier connecteur 10 finit d'attirer le deuxième connecteur 20 vers le premier connecteur 10 et permet de terminer l'accouplement mécanique et électrique entre le deuxième connecteur 20 et le premier connecteur 10.

La figure 15 représente un mode de réalisation dans lequel le dispositif est mobile sur un ou plusieurs rails 17 posés sur le sol (deux rails sont représentés sur la figure 15). Ces rails 17 font ainsi partie de la première partie 1 du système. Le principe de balise 41 décrit ci-dessus peut être maintenu mais n'est pas forcément nécessaire. En variante, un système de butée mécanique ou un système de positionnement présent dans le véhicule permet au véhicule de se positionner correctement par rapport aux rails 17 et donc par rapport au dispositif de l'invention. Avantageusement, une solution de butée est agencée sur les rails pour obtenir l'arrêt du dispositif dans une position déterminée, sous la deuxième partie. Avantageusement, pour réaliser la liaison électrique à la prise murale 30, le dispositif comporte des conducteurs 170 logés dans un ou plusieurs des rails 17 et venant se connecter électriquement sur des organes de connexion présents sur les roulettes. Cette solution présente ainsi l'avantage de ne pas nécessiter la présence de fils entre la prise 30 et le dispositif. La figure 16 illustre le principe de fonctionnement du système pour cette dernière configuration. Les deux étapes finales de connexion sont identiques à celles déjà décrites ci-dessus.

Avantageusement, de manière non limitative, le premier connecteur 10 et son boîtier se présentent par exemple sous la forme d'un socle de prise électrique et le deuxième connecteur 20 se présente par exemple sous la forme d'une fiche venant se connecter sur ledit socle. Le boîtier 200 formant la fiche pourra notamment prendre une forme adaptée pour venir se connecter plus facilement sur le socle. Lorsque le premier connecteur est intégré à l'enveloppe du dispositif pour recevoir la fiche et que le dispositif est au sol, on comprend que le boîtier de la fiche pourra prendre toute forme qui lui permet de s'orienter le mieux possible vers le socle. Il s'agira par exemple d'une forme présentant des arrondis sur ses flancs latéraux afin de conserver une instabilité lorsqu'elle est sur un support et ainsi une capacité d'orientation autour de son axe.

Le système de l'invention et son dispositif à surface de guidage comporte ainsi de nombreux avantages, parmi lesquels :
- Il est simple à mettre en œuvre. Dans sa manière la plus aisée, il suffit de poser le dispositif sur le sol.
- Il ne nécessite pas d'intervention humaine complexe. Seule une libération de la fiche peut s'avérer nécessaire.
- Ses différents modes de réalisation permettent de proposer des solutions plus ou moins complexes et adaptées à différentes infrastructures.
- Il est peu couteux, notamment en comparaison d'une solution de recharge par induction.
- Il ne nécessite pas de modifications importantes au niveau du véhicule électrique.

## Revendications

1. Dispositif de connexion électrique comprenant :
- Une enveloppe (15) externe,
- Un premier connecteur (10) intégré dans ladite enveloppe et présentant une face avant (11) sur ladite enveloppe, le premier connecteur comportant un premier organe de connexion électrique destiné à être relié à un circuit électrique d'alimentation (3) et qui comporte deux premiers contacts électriques, le premier connecteur comportant des premiers moyens magnétiques pour attirer par effet magnétique un deuxième connecteur (20) de manière à coller par effet magnétique une face avant (21) dudit deuxième connecteur contre la face avant (11) du premier connecteur et pour connecter électriquement le premier organe de connexion électrique avec un deuxième organe de connexion électrique du deuxième connecteur,
- **Caractérisé en ce qu'**il comporte :
- Des deuxièmes moyens magnétiques de guidage intégrés à ladite enveloppe (15) du dispositif et agencés autour de la face avant du premier connecteur pour assurer exclusivement un guidage du deuxième connecteur vers ledit premier connecteur de manière à assurer leur jonction par effet magnétique,
- Les deuxièmes moyens magnétiques de guidage comportant plusieurs bobines (B1, B2, B3) de forme annulaire agencées de manière concentrique par rapport au premier connecteur et des moyens de commande desdites bobines,
- Lesdits moyens de commande étant configurés pour exécuter une séquence de commande desdites bobines, comportant des étapes d'activation successives desdites bobines concentriques.

2. Dispositif selon la revendication 1, **caractérisé en ce qu'**il comporte des moyens mécaniques de guidage qui comportent une surface de guidage (150) prolongeant de manière continue la face avant (11) du premier connecteur (10) vers l'extérieur.

3. Dispositif selon la revendication 2, **caractérisé en ce que** ladite surface de guidage (150) présente une forme concave, de manière à former un réceptacle et **en ce que** ledit premier connecteur est intégré au fond dudit réceptacle.

4. Dispositif selon l'une des revendications 2 ou 3, caractérisé en ce lesdits deuxièmes moyens magnétiques comportent un plastique magnétique composant au moins partiellement ladite enveloppe.

5. Système de connexion électrique comprenant :
- Une première partie (1) comprenant un premier connecteur électrique (10) destiné à être relié à un circuit électrique d'alimentation (3),
- Une deuxième partie (2) comprenant un deuxième connecteur électrique (20) destiné à être relié à un appareil électrique (4) à alimenter,
- Des premiers moyens magnétiques pour attirer par effet magnétique le deuxième connecteur (20) vers le premier connecteur (10) de manière à connecter électriquement le premier connecteur électrique au deuxième connecteur électrique,
- **Caractérisé en ce que** la première partie (1) comporte un dispositif de connexion électrique conforme à l'une des revendications 1 à 4.

6. Installation de chargement d'une batterie d'un véhicule électrique, **caractérisée en ce qu'**elle comprend un système de connexion tel que défini dans la revendication 5 et dans lequel ladite première partie (1) ou ladite deuxième partie est connectée à un circuit électrique d'alimentation (3) et, respectivement, ladite deuxième partie (2) ou ladite première partie est reliée à un système d'alimentation du véhicule électrique (40).

7. Installation de chargement selon la revendication 6, **caractérisée en ce que** ladite première partie (1) est posée sur le sol.

8. Installation de chargement selon la revendication 6, **caractérisée en ce que** ladite première partie (1) est intégrée dans le sol (S).

9. Installation de chargement selon l'une des revendications 6 à 8, **caractérisée en ce que** la deuxième partie (2) comporte un câble qui la relie au système d'alimentation du véhicule électrique et un enrouleur agencé pour enrouler ledit câble.

10. Installation de chargement selon la revendication 6, **caractérisée en ce que** la deuxième partie (2) est positionnée sur un support (6) de manière à être surélevée par rapport au sol.

11. Installation de chargement selon la revendication 6, **caractérisée en ce que** ladite première partie (1) comporte des moyens de déplacement sur le sol.

12. Installation de chargement selon la revendication 11, **caractérisée en ce que** lesdits moyens de déplacement comportent des roulettes (16) et un moteur agencé pour entraîner lesdites roulettes.

13. Installation de chargement selon la revendication 12, **caractérisée en ce que** lesdits moyens de déplacement comportent des rails (17) coopérant avec lesdites roulettes (16).

14. Installation de chargement selon la revendication 13, **caractérisée en ce que** la première partie (1) comporte des conducteurs (170) électriques logés dans les rails (17).

15. Installation de chargement selon l'une des revendications 6 à 14, **caractérisée en ce que** ladite première partie (1) comporte une unité de commande et une unité de détection reliées à ladite unité de commande.

16. Installation de chargement selon la revendication 15, **caractérisée en ce que** la deuxième partie (2) comporte une balise (41) destinée à être détectée par l'unité de détection de la première partie (1).

## Patentansprüche

1. Vorrichtung zur elektrischen Verbindung, umfassend:
- eine Außenhülle (15),
- einen ersten Verbinder (10), der in die Hülle integriert ist und eine Vorderseite (11) auf der Hülle aufweist, wobei der erste Verbinder ein erstes Organ zur elektrischen Verbindung aufweist, das dazu bestimmt ist, an eine elektrische Versorgungsschaltung (3) angebunden zu sein, und das zwei erste elektrische Kontakte aufweist, wobei der erste Verbinder erste Magnetmittel aufweist, um einen zweiten Verbinder (20) durch Magnetwirkung anzuziehen, um durch Magnetwirkung eine Vorderseite (21) des zweiten Verbinders an die Vorderseite (11) des ersten Verbinders zu heften und das erste Organ zur elektrischen Verbindung mit einem zweiten Organ zur elektrischen Verbindung des zweiten Verbinders elektrisch zu verbinden,
- **dadurch gekennzeichnet, dass** sie Folgendes aufweist:
- zweite Führungs-Magnetmittel, die in die Hülle (15) der Vorrichtung integriert sind und um die Vorderseite des ersten Verbinders angeordnet sind, um ausschließlich eine Führung des zweiten Verbinders zum ersten Verbinder hin sicherzustellen, um ihre Verbindung durch Magnetwirkung sicherzustellen,
- wobei die zweiten Magnetmittel mehrere ringförmige Spulen (B1, B2, B3), die bezogen auf den ersten Verbinder konzentrisch angeordnet sind, und Steuermittel der Spulen aufweisen,
- wobei die Steuermittel dazu ausgebildet sind, eine Steuerungsabfolge der Spulen auszuführen, die aufeinanderfolgende Schritte des Aktivierens der konzentrischen Spulen aufweist.

2. Vorrichtung nach Anspruch 1, **dadurch gekennzeichnet, dass** sie mechanische Führungsmittel aufweist, die eine Führungsfläche (150) aufweisen, die die Vorderseite (11) des ersten Verbinders (10) durchgehend nach außen verlängert.

3. Vorrichtung nach Anspruch 2, **dadurch gekennzeichnet, dass** die Führungsfläche (150) eine konkave Form aufweist, um eine Aufnahme zu bilden, und dadurch, dass der erste Verbinder in den Boden der Aufnahme integriert ist.

4. Vorrichtung nach einem der Ansprüche 2 oder 3, **dadurch gekennzeichnet, dass** die zweiten Magnetmittel einen magnetischen Kunststoff aufweisen, der die Hülle wenigstens teilweise bildet.

5. System zur elektrischen Verbindung, umfassend:
- einen ersten Abschnitt (1), der einen ersten elektrischen Verbinder (10) umfasst, der dazu bestimmt ist, an eine elektrische Versorgungsschaltung (3) angebunden zu sein,
- einen zweiten Abschnitt (2), der einen zweiten elektrischen Verbinder (20) umfasst, der dazu bestimmt ist, an ein zu versorgendes elektrisches Gerät (4) angebunden zu sein,
- erste Magnetmittel, um den zweiten Verbinder (20) durch Magnetwirkung zum ersten Verbinder (10) hin anzuziehen, um den ersten elektrischen Verbinder mit dem zweiten elektrischen Verbinder elektrisch zu verbinden,
- **dadurch gekennzeichnet, dass** der erste Abschnitt (1) eine Vorrichtung zur elektrischen Verbindung nach einem der Ansprüche 1 bis 4 aufweist.

6. Einrichtung zum Laden einer Batterie eines elektrischen Fahrzeugs, **dadurch gekennzeichnet, dass** sie ein Verbindungssystem nach Anspruch 5 umfasst, und wobei der erste Abschnitt (1) oder der zweite Abschnitt mit einer elektrischen Versorgungsschaltung (3) verbunden ist beziehungsweise der zweite Abschnitt (2) oder der erste Abschnitt an ein Versorgungssystem des elektrischen Fahrzeugs (40) angebunden ist.

7. Ladeeinrichtung nach Anspruch 6, **dadurch gekennzeichnet, dass** der erste Abschnitt (1) auf dem Boden steht.

8. Ladeeinrichtung nach Anspruch 6, **dadurch gekennzeichnet, dass** der erste Abschnitt (1) in den Boden (S) integriert ist.

9. Ladeeinrichtung nach einem der Ansprüche 6 bis 8, **dadurch gekennzeichnet, dass** der zweite Abschnitt (2) ein Kabel, das ihn an das Versorgungssystem des elektrischen Fahrzeugs anbindet, und einen Wickler, der angeordnet ist, das Kabel aufzuwickeln, aufweist.

10. Ladeeinrichtung nach Anspruch 6, **dadurch gekennzeichnet, dass** der zweite Abschnitt (2) auf einem Träger (6) positioniert ist, so dass er im Verhältnis zum Boden erhöht ist.

11. Ladeeinrichtung nach Anspruch 6, **dadurch gekennzeichnet, dass** der erste Abschnitt (1) Mittel zur Bewegung auf dem Boden aufweist.

12. Ladeeinrichtung nach Anspruch 11, **dadurch gekennzeichnet, dass** die Bewegungsmittel Rollen (16) und einen Motor, der angeordnet ist, die Rollen anzutreiben, aufweisen.

13. Ladeeinrichtung nach Anspruch 12, **dadurch gekennzeichnet, dass** die Bewegungsmittel Schienen (17) aufweisen, die mit den Rollen (16) zusammenwirken.

14. Ladeeinrichtung nach Anspruch 13, **dadurch gekennzeichnet, dass** der erste Abschnitt (1) elektrische Leiter (170) aufweist, die in den Schienen (17) aufgenommen sind.

15. Ladeeinrichtung nach einem der Ansprüche 6 bis 14, **dadurch gekennzeichnet, dass** der erste Abschnitt (1) eine Steuereinheit und eine Detektionseinheit, die an die Steuereinheit angebunden sind, aufweist.

16. Ladeeinrichtung nach Anspruch 15, **dadurch gekennzeichnet, dass** der zweite Abschnitt (2) einen Beacon (41) aufweist, der dazu bestimmt ist, von der Detektionseinheit des ersten Abschnitts (1) detektiert zu werden.

## Claims

1. Electrical connection device, comprising:
- an outer cover (15),
- a first connector (10) which is integrated into said cover and has a front face (11) on said cover, the first connector including a first electrical connection member which is intended to be connected to an electrical power supply circuit (3) and includes two first electrical contacts, the first connector including first magnetic means for magnetically attracting a second connector (20) so as to magnetically bond a front face (21) of said second connector to the front face (11) of the first connector and for electrically connecting the first electrical connection member to a second electrical connection member of the second connector,
- **characterized in that** it includes:
- second magnetic guiding means which are integrated into said cover (15) of the device and arranged around the front face of the first connector exclusively to guide the second connector towards said first connector so as to join them together magnetically,
- the second magnetic guiding means including a plurality of ring-shaped coils (B1, B2, B3) which are arranged concentrically around the first connector and control means for controlling said coils,
- said control means being configured to execute a control sequence for controlling said coils, which includes successive steps of activating said concentric coils.

2. Device according to Claim 1, **characterized in that** it includes mechanical guiding means which include a guiding surface (150) which extends the front face (11) of the first connector (10) continuously outwards.

3. Device according to Claim 2, **characterized in that** said guiding surface (150) has a concave shape, so as to form a container and **in that** said first connector is integrated into the bottom of said container.

4. Device according to one of Claims 2 and 3, **characterized in that** said second magnetic means include a magnetic plastic which at least partially constitutes said cover.

5. Electrical connection system comprising:
- a first part (1) comprising a first electrical connector (10) which is intended to be connected to an electrical power supply circuit (3),
- a second part (2) comprising a second electrical connector (20) which is intended to be connected to an electrical appliance (4) to be supplied with power,
- first magnetic means for magnetically attracting the second connector (20) towards the first connector (10) so as to electrically connect the first electrical connector to the second electrical connector,
- **characterized in that** the first part (1) includes an electrical connection device in accordance with one of Claims 1 to 4.

6. Charging unit for charging a battery of an electric vehicle, **characterized in that** it comprises a connection system as defined in Claim 5 and in which said first part (1) or said second part is connected to an electrical power supply circuit (3) and, respectively, said second part (2) or said first part is connected to a power supply system for supplying power to the electric vehicle (40).

7. Charging unit according to Claim 6, **characterized in that** said first part (1) is placed on the ground.

8. Charging unit according to Claim 6, **characterized in that** said first part (1) is integrated into the ground (S).

9. Charging unit according to one of Claims 6 to 8, **characterized in that** the second part (2) includes a cable which connects it to the power supply system for supplying power to the electric vehicle and a drum which is arranged to wind in said cable.

10. Charging unit according to Claim 6, **characterized in that** the second part (2) is positioned on a supporting member (6) so as to be raised off the ground.

11. Charging unit according to Claim 6, **characterized in that** said first part (1) includes movement means for moving over the ground.

12. Charging unit according to Claim 11, **characterized in that** said movement means include wheels (16) and a motor which is arranged to drive said wheels.

13. Charging unit according to Claim 12, **characterized in that** said movement means include rails (17) which cooperate with said wheels (16).

14. Charging unit according to Claim 13, **characterized in that** the first part (1) includes electrical conductors (170) which are housed in the rails (17).

15. Charging unit according to one of Claims 6 to 14, **characterized in that** the first part (1) includes a control unit and a detection unit which are connected to said control unit.

16. Charging unit according to Claim 15, **characterized in that** the second part (2) includes a beacon (41) which is intended to be detected by the detection unit of the first part (1).
